# EUROPEAN PATENT APPLICATION

(11) **EP 4 779 545 A1**
(43) Date of publication of application: **22.07.2026**
(21) Application number: 26152260.1
(22) Date of filing: 16.01.2026
(51) Int. Cl.: G06Q 10/20

(54) **SYSTEMS AND METHODS FOR PROVIDING AUTOMATED CUSTOMIZED PRODUCT SUPPORT FOR MATERIAL TEST SYSTEMS**

(30) Priority: 17.01.2025 US 202563746574 P; 13.01.2026 US 202619447715
(71) Applicant: Illinois Tool Works Inc., Glenview IL 60025 (US)
(72) Inventor: LEVIS, Katherine, Glenview, 60025 (US); UNGAR, Ronna, Glenview, 60025 (US)
(74) Representative: HGF

(57) **Abstract**

Disclosed example systems system to provide support for customized material testing systems, include: a support server configured to supplement the query with information identifying one or more of the identifiable components; a knowledge base comprising troubleshooting information related to a plurality of material testing systems and a plurality of identifiable components; a knowledge base editor configured to transmit a user interface for input of troubleshooting information and to modify the knowledge base based on inputs received via the user interface; and a query processing server configured to: generate a response to the query by processing the natural language user input, the information identifying the one or more of the identifiable components, and the troubleshooting information; and provide the response and a selection of the troubleshooting information to the user device, the selection of the troubleshooting information being based on the response.

## Description

### RELATED APPLICATIONS

The present application claims the benefit of U.S. Provisional Patent Application Serial No. 63/746,574, filed January 17, 2025, entitled "SYSTEMS AND METHODS FOR PROVIDING AUTOMATED CUSTOMIZED PRODUCT SUPPORT FOR MATERIAL TEST SYSTEMS." The entirety of U.S. Provisional Patent Application Serial No. 63/746,574 is expressly incorporated herein by reference.

### FIELD OF THE DISCLOSURE

This disclosure relates generally to mechanical testing, and more particularly, to systems and methods for providing automated customized product support for material test systems.

### BACKGROUND

Universal testing machines are used to perform mechanical testing, such as compression strength testing or tension strength testing, on materials or components. In the event that errors or problems are encountered with such testing machines, the users or owners often seek the assistance of the machine manufacturer. To this end, testing machine manufacturers may provide support services including phone-based support and/or on-site visits by trained technicians.

### SUMMARY

Systems and methods for providing automated customized product support for material test systems are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is an example testing device to perform mechanical property testing, in accordance with aspects of this disclosure.
FIG. 2 is a block diagram of an example implementation of the testing device of FIG. 1.
FIG. 3 illustrates an example system to provide automated customized product support for material test systems, in accordance with aspects of this disclosure.
FIG. 4 illustrates an example user interface that may be used to implement the user device of FIG. 3 to receive a user input including a query involving the material test system.
FIGS. 5A and 5B illustrate example user interfaces that may be provided by the knowledge base editor for receiving a user input including troubleshooting information for modifying the knowledge base, including troubleshooting task information and/or troubleshooting resources information.
FIG. 6 is a flowchart representative of example machine readable instructions which may be executed by the example support server of FIG. 3 to supplement a user support query with information identifying one or more of the identifiable components of a corresponding material testing system.
FIG. 7 is a flowchart representative of example machine readable instructions which may be executed by the example knowledge base editor of FIG. 3 to modify the knowledge base based on inputs received via the user interface.
FIG. 8 is a flowchart representative of example machine readable instructions which may be executed by the query processing server of FIG. 3 to generate a response to a user support query by processing the natural language user input using troubleshooting information stored in a knowledge base.
FIG. 9 is a block diagram of an example computing system that may implement the user devices, the support server, the query processing server, the language model, the knowledge base, and/or the knowledge base editor of FIG. 3.

The figures are not necessarily to scale. Wherever appropriate, similar or identical reference numerals are used to refer to similar or identical components.

### DETAILED DESCRIPTION

When a conventional mechanical testing device is not operating as desired, the operator (or other personnel associated with the testing device) may contact a manufacturer or distributor of the testing device in an attempt to troubleshoot the operational issue. For troubleshooting conventional testing systems, contact between the service personnel and the testing device operator often involves multiple, separate contacts such as phone calls, emails, text chats, and/or other steps to provide the complete set of information needed by the service personnel to resolve the issue to the satisfaction of the operator. Such multiple steps can be a source of frustration to the operator and/or reduces uptime of the testing device for performing mechanical tests. Furthermore, if a resolution of the issue cannot be accomplished with remote service personnel, an in-person service visit may be required, which increases the service costs to the owner of the testing device and/or to the provider of the support services.

Disclosed example systems and methods improve the ability of a test system owner or operator to diagnose common problems encountered by material testing systems at lower cost and/or in less time. In disclosed examples, a support system for material testing systems uses a language model, such as a large language model, in conjunction with information about individual identifiable components of the material testing systems to more quickly and accurately provide relevant troubleshooting information to a user. Disclosed example systems and methods reduce problem resolution time, reduce equipment service costs, and improve uptime.

As used herein, a "large language model" refers to a very large deep learning model that is pre-trained on a large amount of data. The underlying transformer is a set of neural network that consist of an encoder and a decoder with self-attention capabilities. The encoder and decoder extract meanings from a sequence of text and understand the relationships between words and phrases in it.

According to aspects of this disclosure, example systems to provide support for customized material testing systems include: a support server configured to supplement a query with information identifying one or more identifiable components of a material testing system associated with the query, the material testing system configured to perform mechanical testing of a specimen and to measure a result of the mechanical testing, the query comprising a natural language input; a knowledge base comprising troubleshooting information related to a plurality of material testing systems and a plurality of identifiable components; a knowledge base editor configured to transmit a user interface for input of troubleshooting information and to modify the knowledge base based on inputs received via the user interface; and a query processing server configured to: generate a response to the query by processing the natural language user input, the information identifying the one or more of the identifiable components, and the troubleshooting information; and provide the response and a selection of the troubleshooting information to a user device associated with the query, the selection of the troubleshooting information being based on the response.

In some example systems, the identifiable component information includes information identifying at least one of a type of component of the material testing system, a characteristic of the component, a serial number of the component, a model number of the component, or a batch number of the component. In some example systems, the identifiable component information includes a listing of the components installed on the material testing system. In some example systems, the query processing server is configured to process the natural language user input using a large language model. In some example systems, the user device is a smartphone, a tablet computer, or a computer.

In some example systems, the support server is configured to communicate with the material testing system to update a listing of the plurality of identifiable components on the material testing system stored at the support server. In some example systems, the support server is configured to communicate with the material testing system to update the listing in response to receiving the query.

Some example systems further include the material testing system, in which the material testing system is configured to perform one or more of compression strength testing, tension strength testing, shear strength testing, bend strength testing, deflection strength testing, tearing strength testing, peel strength testing, torsional strength testing, or any other compressive or tensile testing, or dynamic testing. In some example systems, one or more of the plurality of identifiable components are associated with a type of testing performed by the material testing system. In some example systems, the troubleshooting information comprises one or more of troubleshooting tasks, troubleshooting task steps, informational documents, or web links to informational resources.

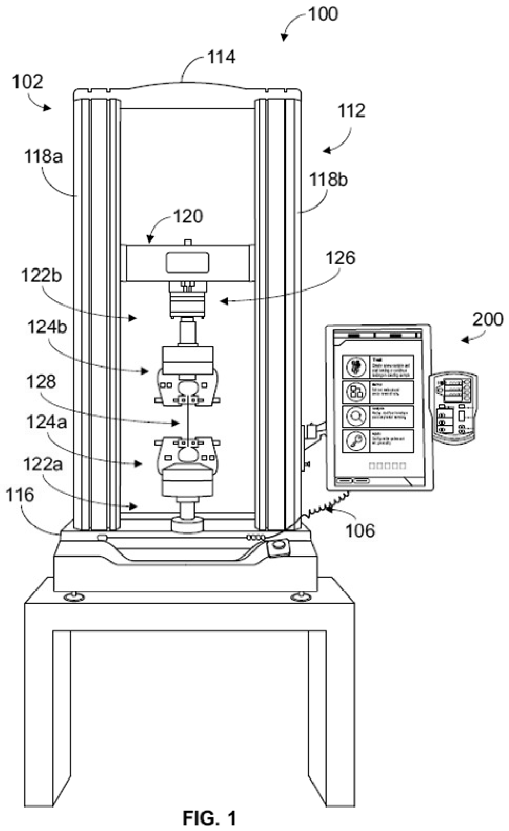

FIG. 1 shows an example material testing system 100. As shown, the material testing system 100 includes a material testing machine 102 (also known as a universal testing machine), and a computing system 200 connected to the material testing machine 102 through cable 106. While shown as being physically connected, in some examples, the connections may be wireless rather than wired.

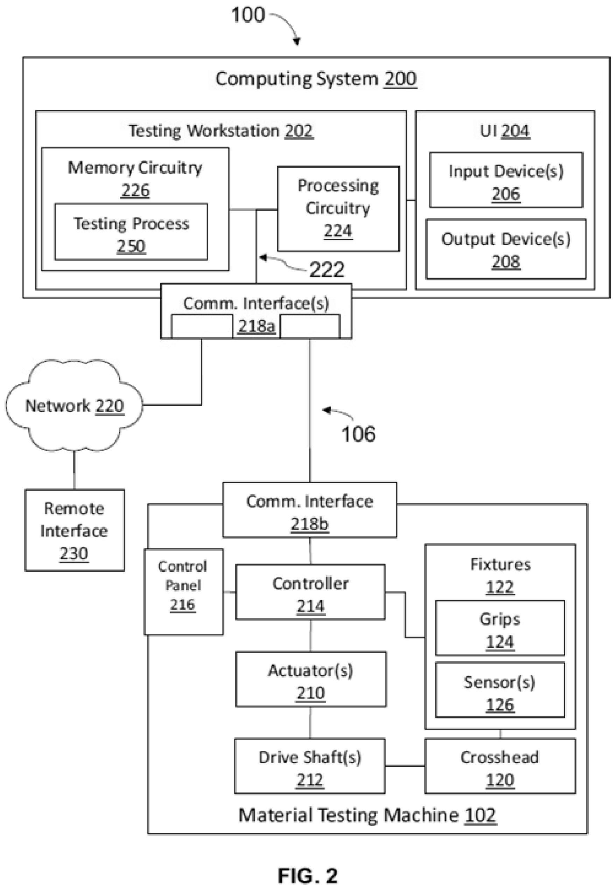

In the example of FIG. 1, the material testing machine 102 includes a frame 112. In some examples, the frame 112 provides rigid structural support for the other components of the material testing machine 102. As shown, the frame 112 comprises a top plate 114 and a bottom base beam 116 connected by two columns 118. In some examples, the columns 118 of the frame 112 may house guide rails and/or drive shafts 212 of the material testing machine 102 (see, e.g., FIG. 2). For example, the columns 118 may include two lead screws with zero, one, or more guide rails, or may include one lead screw and one or more guide rails.

In the example of FIG. 1, a movable crosshead 120 extends between the columns 118. In some examples, the movable crosshead 120 may be connected to the guide rails and/or drive shafts 212 housed in the columns 118, and/or configured to move toward and/or away from the base beam 116 through (e.g., motorized) actuation of the drive shaft(s) 212. While one movable crosshead 120 is shown in the example of FIG. 1, in some examples, the material testing machine 102 may have multiple movable crossheads 120, and/or other movable members.

In the example of FIG. 1, a fixture 122 is attached to the bottom base beam 116 of the frame 112, as well as to the movable crosshead 120. As shown, the lower fixture 122a includes a grip 124a, while the upper fixture 122b includes both a test sensor 126 and a grip 124b. While one test sensor 126 and two grips 124 are shown in the example of FIG. 1, in some examples, the material testing machine 102 may include more or fewer test sensors 126 and/or grips 124.

In the example of FIG. 1, the grips 124 are holding a test specimen 128. While shown as a (e.g., steel) rope/wire, in some examples, the test specimen 128 may be some other type of material and/or component.While shown as being rope holders, in some examples, the grip 124a and/or grip 124b may alternatively, or additionally, be configured as a bolt holder, wedge grip, side acting grip, manual grip, roller grip, capstan grip, and/or syringe holder. In some examples, one or both of the grips 124 may be replaced by a compression platen configured to compress the test specimen 128.

In the example of FIG. 1, the test sensor 126 is connected to the grip 124, such that the test sensor 126 can measure forces acting on the grip 124 (and/or specimen 128, crosshead 120, etc.). In some examples, the test sensor 126 may be a load cell. In some examples, the test sensor 126 may be some other type of sensor.

In some examples, the material testing machine 102 may be configured for static mechanical testing. For example, the material testing machine 102 may be configured for compression strength testing, tension strength testing, shear strength testing, bend strength testing, deflection strength testing, tearing strength testing, peel strength testing (e.g., strength of an adhesive bond), torsional strength testing, and/or any other compressive and/or tensile testing. Additionally or alternatively, the material testing machine 102 may be configured to perform dynamic testing.

In some examples, the material testing machine 102 is configured to interface with the computing system 200 to conduct a test method. For example, the computing system 200 may communicate with a controller 214 (see, e.g., FIG. 2) of the material testing machine 102 to conduct the test method.

FIG. 2 is a block diagram showing details of the computing system 200, as well as additional details of the material testing machine 102. In the example of FIG. 2, the example material testing machine 102 includes one or more actuators 210 connected with one or more drive shafts 212. In some examples, the actuators 210 may be used to provide force to, and/or induce motion of, the drive shafts 212. In some examples, the actuators 210 may include electric motors, pneumatic actuators, hydraulic actuators, piezoelectric actuators, relays, and/or switches.

The drive shafts 212 are further shown connected to the movable crosshead 120, such that movement of the drive shaft(s) 212 via the actuator(s) 210 will result in movement of the movable crosshead 120. While termed drive shafts 212 in the example of FIG. 2, in some examples, the drive shafts 212 may be some other mechanical means of moving the movable crosshead 120 though inducement by the actuator(s) 210.

The example material testing machine 102 further includes a controller 214 in electrical communication with the actuator(s) 210. In some examples, the controller 214 may include processing circuitry and/or memory circuitry. In some examples, the controller 214 may be configured to control the material testing machine 102 based on one or more commands, control inputs, and/or test parameters. In some examples, the controller 214 may be configured to translate commands, control inputs, and/or test parameters (e.g., received from the computing system 200) to appropriate (e.g., electrical) signals that may be delivered to the actuator(s) 210, thereby controlling operation of the material testing machine 102 (e.g., via the actuator(s) 210). For example, the controller 214 may provide one or more signals(s) commanding more or less electrical power be provided to the actuator(s) 210, to thereby increase or decrease applied force.

In the example of FIG. 2, the controller 214 is further in electrical communication with the fixtures 122 (e.g., the grips 124 and test sensor(s) 126). In some examples, the controller 214 may be configured to translate commands, control inputs, and/or test parameters (e.g., received from the computing system 200) to appropriate (e.g., electrical) signals that may be delivered to the grips 124, to thereby control (e.g., grip or release) operation of the grips 124. In some examples, the controller 214 may be configured to translate commands, control inputs, and/or parameters (e.g., received from the computing system 200) to appropriate (e.g., electrical) signals that may be delivered to the sensor(s) 126, to thereby control operation of the sensor(s) 126. In some examples, the controller 214 may be configured to translate measurement data received from the sensor(s) 126, and/or send measurement data to the computing system 200.

The example controller 214 is further in electrical communication with a control panel 216 of the material testing machine 102. In some examples, the control panel 216 may include one or more input devices (e.g., buttons, switches, slides, knobs, microphones, dials, and/or other electromechanical input devices). In some examples, the control panel 216 may be used by an operator to directly control the material testing machine 102. In some examples, the controller 214 may be configured to translate commands, control inputs, and/or test parameters received via the control panel 216 to appropriate (e.g., electrical) signals that may be delivered to the actuator(s) 210 and/or grip(s) 124 to control the material testing machine 102.

The controller 214 is also shown in electrical communication with a network interface 218b of the material testing machine 102. In some examples, the network interface 218b includes hardware, firmware, and/or software to connect the material testing machine 102 to a complementary workstation network interface 218a of the computing system 200. In some examples, the controller 214 may receive information (e.g., commands) from the computing system 200 through the network interfaces 218, and/or send information (e.g., measurement data from sensor(s) 126) to the computing system 200 through the workstation network interfaces 218.

In the example of FIG. 2, the computing system 200 includes a testing workstation 202 and a user interface (UI) 204 interconnected with one another. As shown, the UI 204 may include one or more input devices 206 configured to receive inputs from a user, and one or more output devices 208 configured to provide outputs to the user.

In some examples, the one or more input devices 206 may comprise one or more touch screens, mice, keyboards, buttons, switches, slides, knobs, microphones, dials, and/or other input devices 206. In some examples, the one or more output devices 208 may comprise one or more display/touch screens, speakers, lights, haptic devices, and/or other output devices 208. In some examples, the output device(s) 208 (e.g., a display screen) of the UI 204 may output one or more representations of a material testing process 250 configured to allow a user to setup and/or execute a test method and/or analyze test results of the test method. In some examples, the input device(s) 206 of the UI 204 may receive input from a user, and send input data representative of the user input to the testing workstation 202.

In the example of FIG. 2, the example testing workstation 202 includes workstation network interfaces 218a. As shown, one workstation network interface 218a is in communication with the network interface 218b of the material testing machine 102 through cable 106. As shown, the testing workstation 202 further includes a workstation network interface 218a in communication with a network 220 (e.g., the Internet). In the example of FIG. 2, the testing workstation 202 is in communication with a remote interface 230 through the network 220 and workstation network interface 218a. In some examples, the testing workstation 202 may be in communication with one or more other testing systems, servers, and/or other devices through the network and/or workstation network interface(s) 218a. As shown, the workstation network interfaces 218a are electrically connected to a common electrical bus 222 of the testing workstation 202.

In some examples, the testing workstation may be a computing device. In the example of FIG. 2, the testing workstation 202 includes workstation processing circuitry 224 connected to the common electrical bus 222. In some examples, the workstation processing circuitry 224 may comprise one or more processors. In some examples, the workstation processing circuitry 224 is configured to process information received from the UI 204, data importation device(s) 108, and/or material testing machine 102.

In some examples, the workstation processing circuitry 224 is configured to transmit (e.g., via network interface(s) 218a) commands and/or test parameters to the material testing machine 102. In some examples, the workstation processing circuitry 224 is configured to output information to an operator through the UI 204. In some examples, the workstation processing circuitry 224 is configured to execute machine readable instructions stored in workstation memory circuitry 226.

In the example of FIG. 2, the testing workstation 202 further includes workstation memory circuitry 226 connected to the common electrical bus 222. As shown, the workstation memory circuitry 226 includes a material testing process 250. In some examples, the material testing process 250 comprises machine readable instructions. In some examples, the workstation processing circuitry 224 is configured to execute the machine readable instructions of the material testing process 250 to communicate with (e.g., the controller 214 of) the material testing machine 102 to execute a test of a test specimen 128.

In some examples, the workstation 202 may be implemented using a separate user device, such as a smartphone, tablet computer, or other mobile computing device, configured to be in communication with the material testing machine 102.

In some examples, a test of a test specimen 128 is performed (and/or its test results analyzed) according to a particular test method. In some examples, the test method is defined by the parameters of a test file. A test file may include a collection of (e.g., stored) data that is representative of one or more parameters (e.g., test parameters, sample/specimen parameters, analysis parameters, etc.) that define at least a portion of the a test method. For example, test parameters may include a date the test will be run, identification information of the test (e.g., number, name, type, description, etc.), target start/end positions of grip(s) 124, target start/end positions of the crosshead 120, target distance/direction moved by crosshead 120, target speed of movement of crosshead 120, expected result(s) of test (e.g., position/type of break, distance moved before break, force applied before break, post-test characteristics of sample, etc.), time(s) when sensor(s) 126 should take measurement(s), and/or other relevant to a particular test method. Specimen parameters may include a date the specimen 128 was manufactured/shipped/packaged, identification information of the specimen 128 (e.g., number, name, description, etc.), pre-test characteristics of the specimen 128 (e.g., measurements/dimensions, material type, weight, color, shape, modulus, ultimate tensile strength, etc.), and/or other information relevant to a particular specimen 128. Analysis parameters may include one or more algorithms that may be used to evaluate results of the test method (and/or produce additional test results), one or more test result report format(s), and/or one or more thresholds and/or threshold ranges (e.g., by which test results may be adjudged to determine whether the specimen 128 passed or failed the test).

The example test fixture 122 may further include one or more additional sensors 126 to measure conditions in and/or around the test fixture 122 and/or to monitor or measure activity by the test fixture 122. For example, the sensor(s) 126 may include: environmental sensor(s) to measure an ambient temperature, humidity, and/or any other condition(s) around the test fixture 122 that may affect operation; temperature sensors to measure component temperatures; voltage sensors to measure motor voltage, power supply input and/or output voltages, and/or other voltages in the test fixture 122, duty cycles of components in the test fixture 122, and/or other voltage-derived data; current sensors to measure motor current, power supply input and/or output currents, and/or other electrical currents in the test fixture 122, duty cycles of components, and/or other current-derived data; distance and/or proximity sensors to measure distances traveled by components in the test fixture 122 (e.g., distances traveled by grips, by a crosshead, etc.); and/or any other types of sensors for determining relevant information about the test fixture 122.

In addition to detecting conditions in and/or around the test fixture 122 using sensors, the example processing circuitry 224 may monitor for other conditions or states of the test fixture 122 and/or computing system 200. For example, the processing circuitry 224 may monitor and/or determine error codes (e.g., codes detected or generated by software) generated at the material testing system, error messages (e.g., a message generated by software in response to a problematic user action) at the material testing system, security information for the material testing system, logged data at the material testing system, load string information for load string equipment installed on the material testing system, a software version on the material testing system, diagnostic information detected on the material testing system, and/or any other software-detected information.

In some examples, one or more conditions or states of the test fixture 122 and/or the computing system 200 may be detected with a combination of sensors and software.

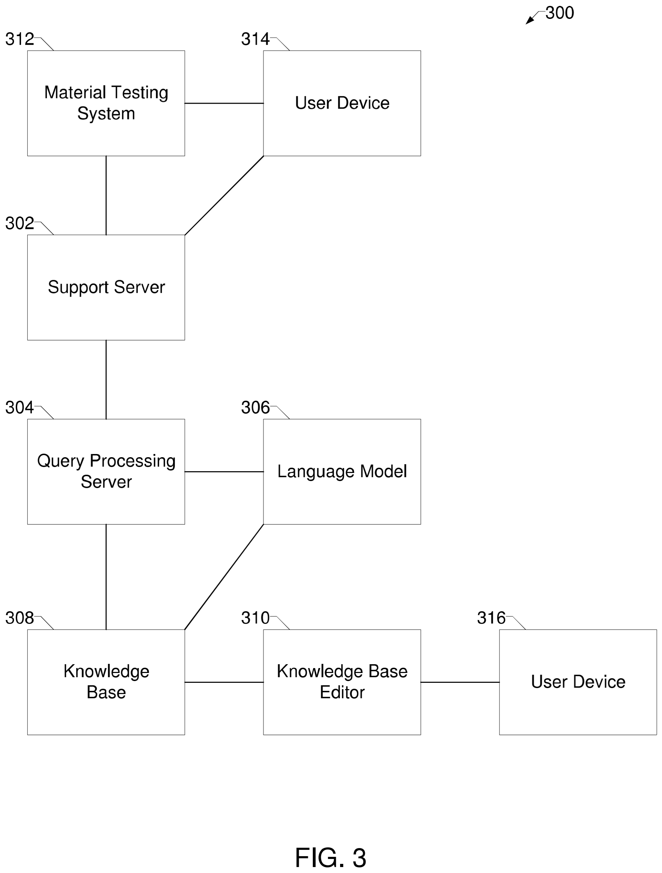

FIG. 3 illustrates an example system 300 to provide automated customized product support for material test systems. The example system 300 may provide faster, easier, and more relevant content for customized or otherwise highly varied products in a manner that reduces involvement by customer support personnel for many support tasks.

The example system 300 includes a support server 302, a query processing server 304, a language model 306, a knowledge base 308, and a knowledge base editor 310.

The system 300 is illustrated in FIG. 3 with an example material testing system 312, such as the material testing system 100 of FIGS. 1 and 2. The material testing system 312 may be paired with, or otherwise in communication with, a user device 314. The example user device 314 enables a user to interface with the system 300 to control the material testing system 312, view test results, and/or obtain technical support for operating the material testing system 312.

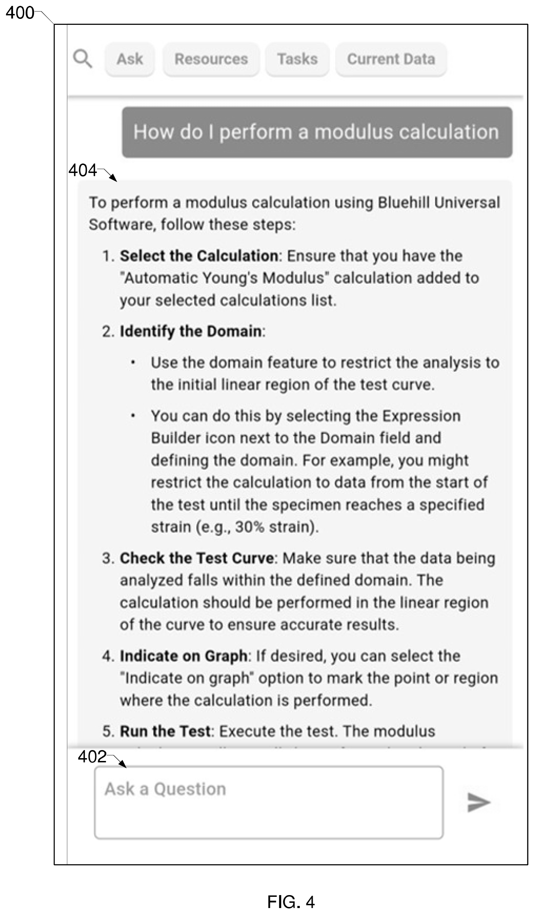

FIG. 4 illustrates an example user interface 400 that may be used to implement the user device 314 of FIG. 3 to receive a user input including a query involving the material testing system 312. The example user interface 400 is implemented via software, such as on a web page interface and/or a dedicated application. The example user interface 400 enables an operator, technician, or any other user to enter a query (e.g., via input field 402) for processing by the query processing server 304.

In the example of FIGS. 3 and 4, the input field 402 accepts natural language inputs, such as a conversational-style question input by the user. The natural language input may be input to the input field 402 via a keyboard (e.g., hardware and/or software-implemented), via voice input to a microphone, and/or via any other type of input.

The user interface 400 further includes an output interface 404, which displays troubleshooting information and/or other information provided by the query processing server 304 and/or the support server 302 in response to a query (e.g., an example query 406). As disclosed in more detail below, the troubleshooting information may include troubleshooting tasks, troubleshooting subtasks or steps, resources such as videos, images, documents, and/or links to access such resources.

In some examples, the user interface 400 enables the user to request support for any of multiple material testing systems. The user interface 400 may include a selection field to enable the user to select one or more of the material testing systems to which a given query applies.

Returning to FIG. 3, the example support server 302 receives queries from user devices (e.g., the user device 314) for support involving the material testing system 312. The support server 302 supplements the query with information identifying one or more of the identifiable components. In the example of FIG. 3, the material testing system 312 may be a customized system having one or more components that are installable and, in some cases, interchangeable with other similar components. For example, the material testing system 312 may be configured to have interchangeable grips to enable the material testing system 312 to use different actuation types (e.g., pneumatic, hydraulic, electric, etc.), to apply different levels of grip force to a specimen, and/or to provide fixturing for different types of specimens and/or for different types of tests. At least some components of the material testing system 312, whether removable or integral to the material testing system 312, are individually identifiable. In some examples, identifiers of some of the components of the material testing system 312 are identified at the time of manufacturing, installation, and/or calibration, and provided to the support server 302. Additionally or alternatively, the support server 302 may communicate with the material testing system 312 to receive and/or update identifiers of one or more of the components installed on the material testing system 312 (e.g., on a periodic basis, in response to receiving a query, in response to other types of triggers, etc.).

In some other examples, the user device 314 may receive identifiers of the identifiable components from the material testing system 312, and transmit the identifiers to the support server 302 in conjunction with the natural language input in the query. For example, the user device 314 may scan a bar code or QR code, or otherwise receive data from the material testing system 312 representing the identifiable components installed on the material testing system 312. Example techniques to receive the data are disclosed in U.S. Patent Publication No. 2024/0159633, corresponding to U.S. Patent Application Serial No. 18/506,694 and entitled "MATERIAL TEST SYSTEMS FOR GENERATING STATIC AND DYNAMIC DIAGNOSTIC INFORMATION." The entirety of U.S. Patent Publication No. 2024/0159633 is incorporated herein by reference. In some examples, the identifiable component information is further supplemented with test file information, specimen information, test result information, and/or other dynamic information determined by the user or the support server 302 to be relevant to the natural language information in the query.

In still other examples, the user device 314 may communicate queries directly to the query processing server 304 and receive responses from the query processing server 304. In some such examples, the support server 302 may provide identifiable component information to the user device 314, which are then provided by the user device 314 with the query to the query processing server 304. For example, the support server 302 may maintain identifiable component information in association with a user account of the user device 314, for retrieval by the user device 314 upon login and/or submission of a query by the user device 314.

The example query processing server 304 receives the queries (e.g., natural language input) and identifiable component information from the support server 302, and generates and transmits responses to the queries to the user device 314 (e.g., directly or via the support server 302). In the example of FIG. 3, the query processing server 304 processes the natural language user input and the identifiable component information using the language model 306, which may be trained at least partially using information contained in troubleshooting resources associated with the material testing system 312 and identifiable components which are compatible with the material testing system 312. The example language model 306 is a large language model (LLM), which may be a newly trained model or based on a foundation model.

In the example of FIG. 3, the query processing server 304 may be trained, tuned, and/or updated using information from the knowledge base 308. The example knowledge base 308 stores troubleshooting information related to a plurality of material testing systems (which may be the subject of technical support requests) and a plurality of identifiable components that are compatible with the material testing systems. Example troubleshooting information that may be used to train and/or tune the language model 306 used by the query processing server 304 include owner's manuals, field service manuals, engineering documentation, prior support history (e.g., transcripts of support service provided previously), training materials, and/or any other published, confidential, and/or proprietary information related to the material testing system 312 and/or identifiable components that are compatible with the material testing system 312.

The knowledge base editor 310 provides an interface for input and/or modification of troubleshooting information in the knowledge base 308. For example, authorized users, such as users who are deemed subject matter experts, may be permitted to add and/or modify troubleshooting information in the knowledge base 308 using an interface provided by the knowledge base editor 310. The knowledge base editor 310 may provide an interface that enforces and/or improves the structure of the troubleshooting information input by the user. For example, the knowledge base editor 310 may include inputs for natural language information, material testing system identification information (e.g., model number), and/or identifiable components.

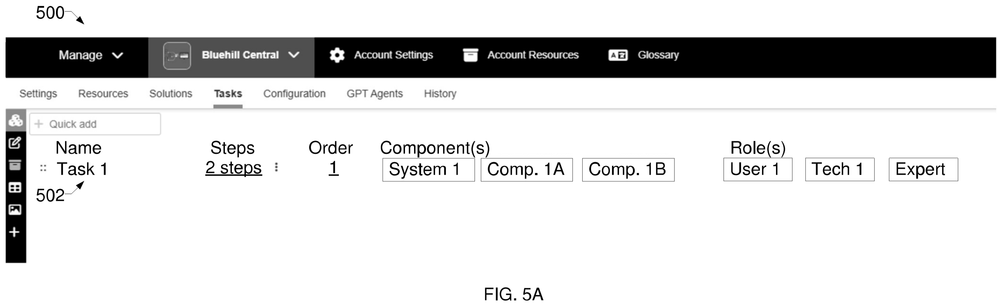

FIG. 5A illustrates an example user interface 500 that may be provided by the knowledge base editor 310 for receiving a user input including troubleshooting information for modifying the knowledge base 308. The example user interface 500 includes inputs to enable a user to input troubleshooting task information, which may be used by the language model 306 to correlate troubleshooting tasks to one or more material testing systems and/or identifiable components of material testing systems. In the example of FIG. 5A, the user has entered a first task 502, which may include steps or subtasks, and a designated order in a series of tasks that may be used to perform troubleshooting according to an established troubleshooting process. The example user may further define user types (e.g., roles) who are authorized to perform the task 502.

The interface 500 may permit the user to select the task 502 and/or elements of the task 502 for editing. The interface 500 provides a structure to the task 502. The knowledge base editor 310 uses the structured data to appropriately tag the troubleshooting information represented by the task 502 for entry into the knowledge base 308 for consumption by the language model 306.

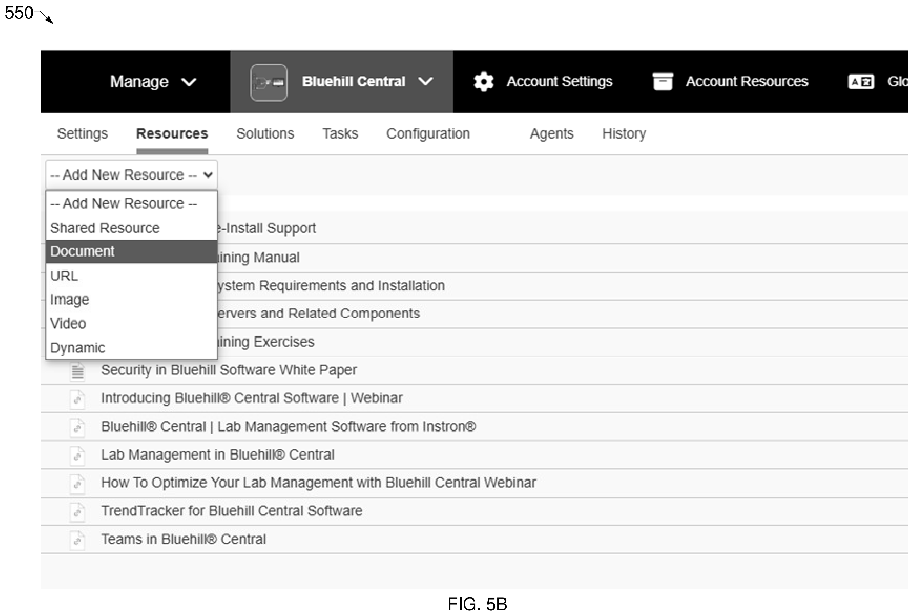

FIG. 5B illustrates an example user interface 550 that may be provided by the knowledge base editor 310 for receiving a user input including troubleshooting information for modifying the knowledge base 308. The example user interface 550 enables the user to input or upload troubleshooting resources, such as documents, videos, images, and/or other resources. The troubleshooting resources may be processed by the language model 306 for further association between troubleshooting information and material testing system and/or identifiable components, and/or may be stored for delivery in association with a response to a user query. Example troubleshooting resources may include owner's manuals, field service manuals, engineering documentation, prior support history (e.g., transcripts of support service provided previously), training materials, and/or any other published, confidential, and/or proprietary information related to the material testing system 312 and/or identifiable components that are compatible with the material testing system 312.

After entry and submission of the task(s) 502 and/or resource(s) 552, the knowledge base editor 310 adds the troubleshooting information to the knowledge base 308. The knowledge base editor 310 may process the data entered by the user (e.g., via the user interfaces 500, 550) to structure and/or tag the data according Based on the specified tasks and feedback, the language model 306 updates vectors and/or other aspects of the model to improve the delivery of troubleshooting resources information.

While a user may not be aware of issues arising from combinations of components being installed on a material testing system, a benefit of training the language model 306 on the knowledge base 308 using the identifiable component information is the ability of the language model 306 to identify statistically likely correlations. In some examples, newly identified statistical correlations identified by the language model may be identified to designated technical support personnel for verification, which may lead to reinforcement or diminishment in the language model 306.

The query processing server 304 generates responses to queries by processing the natural language user input and the information identifying the one or more of the identifiable components (e.g., provided by the support server 302), and processing the troubleshooting information in the language model 306. For example, an LLM portion of the language model 306 may determine the appropriate response based on the weights set during training and/or tuning of the model, which may be based on updated troubleshooting information input via the knowledge base editor 310. Responses may include a selection of stored troubleshooting information (e.g., documents, videos, images, web links, etc.) identified as having at least a threshold relevance to the query based on the language model 306.

The query processing server 304 provides the response and a selection of the troubleshooting information to the user device 314 originating the query. In some examples, the query processing server 304 provides responses to the support server 302, which routes the response to the user device 314. The support server 302 may make perform routing of queries to the query processing server 304 and/or other support resources based on the type and/or content of received queries, and/or based on the status of a customer (e.g., a service level agreement).

The support server 302 may be operated by a first service provider (e.g., the manufacturer of the material testing system 312) for management and servicing of the material testing systems 312, while the query processing server 304 and the language model 306 are operated by a second service provider. The example knowledge base 308 and the knowledge base editor 310 may be operated by the first service provider, the second service provider, a separate service provider from the first and second providers, and/or by a combination of providers. In still other examples, the system 300 is operated by a single service provider. The example support server 302 communicates the query (e.g., the natural language input) and the information identifying one or more of the identifiable components to the query processing server 304. The support server 302, the query processing server 304, the language model 306, the knowledge base 308, and/or the knowledge base editor 310 may be implemented using a combination of one or more software components implemented on one or more hardware systems. For example, each of the support server 302, the query processing server 304, the language model 306, the knowledge base 308, and/or the knowledge base editor 310 may be operated on different computing systems or combinations of computing systems, or one or more of the support server 302, the query processing server 304, the language model 306, the knowledge base 308, and/or the knowledge base editor 310 may be executed on the same computing system using software-implemented server components. In some examples, one or more of the support server 302, the query processing server 304, the language model 306, the knowledge base 308, and/or the knowledge base editor 310 may be implemented on one or more cloud computing instances, which may be combined or may be separated based on the responsible service provider for each component.

The example user devices 314, 316 may be smartphones, tablet computers, desktop computers, laptops, and/or any other type(s) of computing device(s). The user devices 314, 316 may communicate with the support server 302, the query processing server 304, the knowledge base editor 310, and/or the material testing system 312 using wired or wireless communications, which may include direct communication and/or one or more communications networks. In some examples, the user devices 314, 316 are implemented by the computing system 200 controlling the material testing system 312.

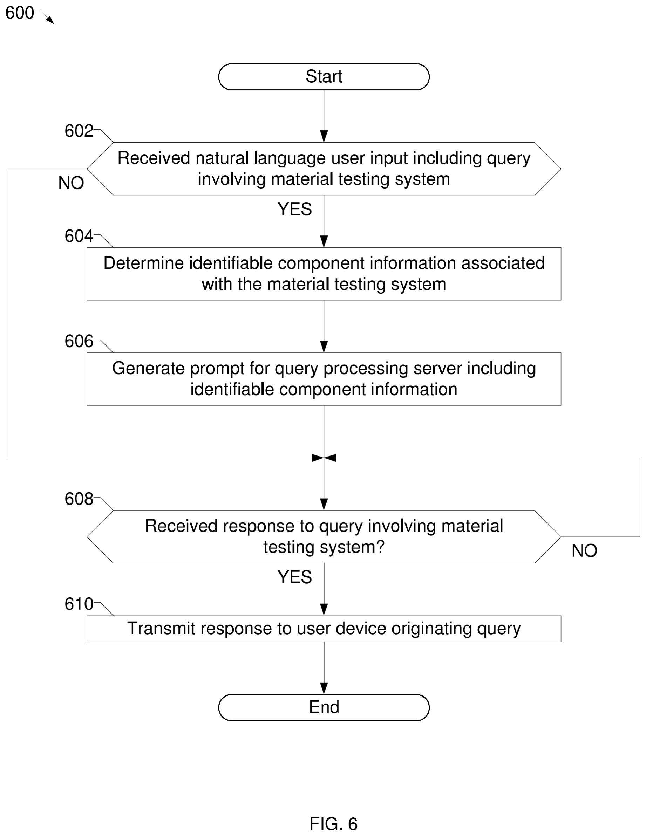

FIG. 6 is a flowchart representative of example machine readable instructions 600 which may be executed by the example support server 302 of FIG. 3 to supplement a user support query with information identifying one or more of the identifiable components of a corresponding material testing system 312. The example instructions 600 are described below with reference to FIG. 3.

At block 602, the support server 302 determines whether a natural language user input, including a query involving a material testing system, has been received. For example, the support server 302 may receive a query associated with (e.g., identifying) the material testing system 312 from the user device 314. If a query has been received (block 602), at block 604 the support server 302 determines identifiable component information associated with the material testing system 312. For example, the support server 302 may use a lookup table to determine installed components on the material testing system 312 using identifying information in the query, and/or may communicate with the identified material testing system 312.

At block 606, the support server 302 generates a prompt for the query processing server 304 including the identifiable component information, and provides the prompt to the query processing server 304.

After generating the prompt (block 606), or if a query has not been received (block 602), at block 608 the support server 302 determines whether a query response involving the material testing system 312 has been received. If a query response involving the material testing system 312 has been received (block 608), at block 610 the support server 302 transmits the received response to the user device 314 that originated the corresponding query. The example instructions 600 then end.

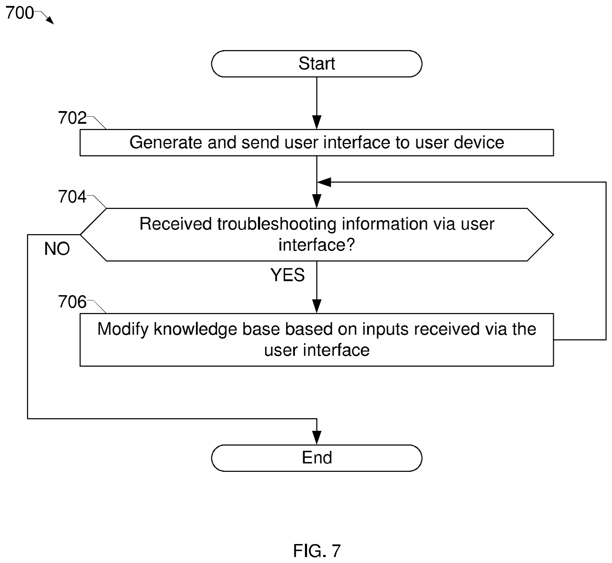

FIG. 7 is a flowchart representative of example machine readable instructions 700 which may be executed by the example knowledge base editor 310 of FIG. 3 to modify the knowledge base based on inputs received via the user interface. The example instructions 700 are described below with reference to FIG. 3.

At block 702, the knowledge base editor 310 generates an sends a user interface (e.g., the user interfaces 500, 550) to the user device 316 logged into the knowledge base editor 310. The example knowledge base editor 310 may provide multiple, different interfaces to facilitate navigation of the interface and/or entry of desired data by the user. For example, a web page style interface may allow the operator to navigate to an interface for entry of a specific type of troubleshooting information.

At block 704, the knowledge base editor 310 determines whether troubleshooting information has been received via the provided user interface. If troubleshooting information has been received (block 704), at block 706 the knowledge base editor 310 modifies the knowledge base 308 based on the inputs received via the user interface. In some examples, the knowledge base editor 310 structures and/or tags the received information for entry into the knowledge base 308. Control then returns to block 704 to receive additional information.

If no further information is received (block 704), the example instructions 700 end.

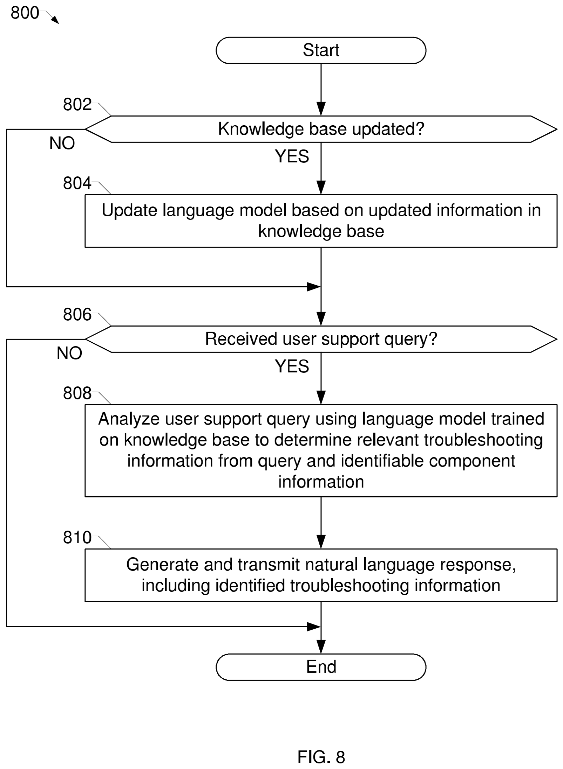

FIG. 8 is a flowchart representative of example machine readable instructions which may be executed by the query processing server 304 of FIG. 3 to generate a response to a user support query by processing the natural language user input using troubleshooting information stored in a knowledge base 308.

At block 802, the query processing server 304 determines whether the knowledge base 308 has been updated. If the knowledge base 308 has been updated (block 802), at block 804 the query processing server 304 directs the language model 306 to be updated based on the updated information in the knowledge base 308.

After updating the language model 306 (block 804), or if the knowledge base 308 is not updated (block 802), at block 806 the query processing server 304 determines whether a user support query has been received. An example user support query may include natural language input and/or identifying information about identifiable components of the material testing system 312.

If a user support query has been received (block 806), at block 808 the query processing server 304 analyzes the user support query using the language model 306, which has been trained on the knowledge base 308 to determine relevant troubleshooting information from query and identifiable component information. For example, the language model 306 may process the natural language input and the identifiable components to determine statistical correlations between the natural language input and/or the identifiable component information with troubleshooting information stored in the knowledge base 308.

At block 810, the query processing server 304 generates and transmits a response (e.g., a natural language or other user-readable response) including identified troubleshooting information. The identified troubleshooting information may include troubleshooting tasks and/or external troubleshooting resources. The query processing server 304 may transmit the response to the support server 302 and/or directly to the originating user device 314.

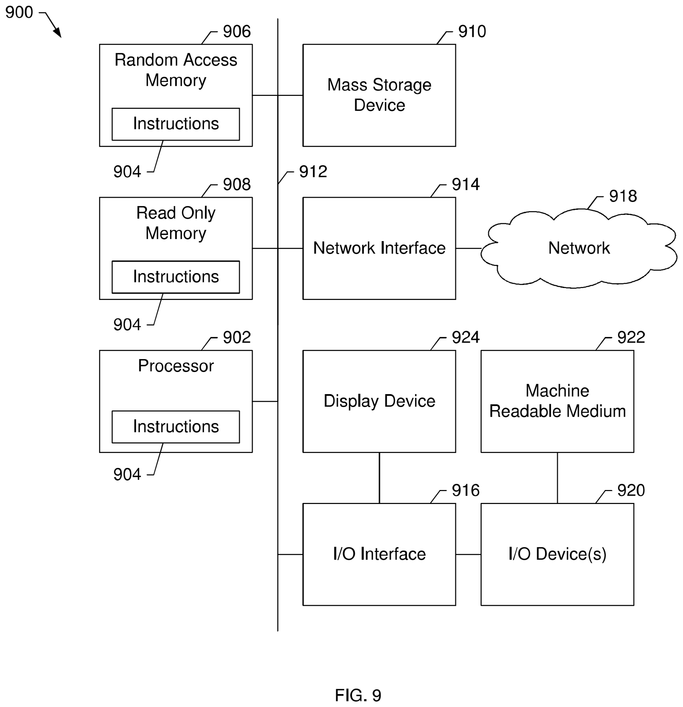

FIG. 9 is a block diagram of an example computing system 900 that may implement the computing system 200, the user devices 314, 316, the support server 302, the query processing server 304, the language model 306, the knowledge base 308, and/or the knowledge base editor 310 of FIG. 3.

The example computing device 900 may be a general-purpose computer, a laptop computer, a tablet computer, a mobile device, a server, an all-in-one computer, and/or any other type of computing device. The computing device 900 of FIG. 9 includes a processor 902, which may be a general-purpose central processing unit (CPU). In some examples, the processor 902 may include one or more specialized processing units, such as FPGA, RISC processors with an ARM core, graphic processing units, digital signal processors, and/or system-on-chips (SoC). The processor 902 executes machine-readable instructions 904 that may be stored locally at the processor (e.g., in an included cache or SoC), in a random access memory 906 (or other volatile memory), in a read-only memory 908 (or other non-volatile memory such as FLASH memory), and/or in a mass storage device 910. The example mass storage device 910 may be a hard drive, a solid-state storage drive, a hybrid drive, a RAID array, and/or any other mass data storage device. A bus 912 enables communications between the processor 902, the RAM 906, the ROM 908, the mass storage device 910, a network interface 914, and/or an input/output interface 916.

An example network interface 914 includes hardware, firmware, and/or software to connect the computing device 900 to a communications network 918 such as the Internet. For example, the network interface 914 may include IEEE 902.X-compliant wireless and/or wired communications hardware for transmitting and/or receiving communications.

An example I/O interface 916 of FIG. 9 includes hardware, firmware, and/or software to connect one or more input/output devices 920 to the processor 902 for providing input to the processor 902 and/or providing output from the processor 902. For example, the I/O interface 916 may include a graphics-processing unit for interfacing with a display device, a universal serial bus port for interfacing with one or more USB-compliant devices, a FireWire, a field bus, and/or any other type of interface. Other example I/O device(s) 920 may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device.

The computing device 900 may access a non-transitory machine-readable medium 922 via the I/O interface 916 and/or the I/O device(s) 920. Examples of the machine-readable medium 922 of FIG. 9 include optical discs (e.g., compact discs (CDs), digital versatile/video discs (DVDs), Blu-ray discs, etc.), magnetic media (e.g., floppy disks), portable storage media (e.g., portable flash drives, secure digital (SD) cards, etc.), and/or any other type of removable and/or installed machine-readable media.

The present methods and systems may be realized in hardware, software, and/or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

## Claims

1. A system to provide support for customized material testing systems, comprising:
a support server configured to supplement a query with information identifying one or more identifiable components of a material testing system associated with the query, the material testing system configured to perform mechanical testing of a specimen and to measure a result of the mechanical testing, the query comprising a natural language input;
a knowledge base comprising troubleshooting information related to a plurality of material testing systems and a plurality of identifiable components;
a knowledge base editor configured to transmit a user interface for input of troubleshooting information and to modify the knowledge base based on inputs received via the user interface; and
a query processing server configured to:
generate a response to the query by processing the natural language user input, the information identifying the one or more of the identifiable components, and the troubleshooting information; and
provide the response and a selection of the troubleshooting information to a user device associated with the query, the selection of the troubleshooting information being based on the response.

2. The system as defined in claim 1, wherein the identifiable component information includes information identifying at least one of a type of component of the material testing system, a characteristic of the component, a serial number of the component, a model number of the component, or a batch number of the component.

3. The system as defined in claim 1, wherein the identifiable component information comprises a listing of the components installed on the material testing system.

4. The system as defined in claim 1, wherein the query processing server is configured to process the natural language user input using a large language model.

5. The system as defined in claim 1, wherein the user device comprises a smartphone, a tablet computer, or a computer.

6. The system as defined in claim 1, wherein the support server is configured to communicate with the material testing system to update a listing of the plurality of identifiable components on the material testing system stored at the support server.

7. The system as defined in claim 6, wherein the support server is configured to communicate with the material testing system to update the listing in response to receiving the query.

8. The system as defined in claim 1, further comprising the material testing system, the material testing system configured to perform one or more of compression strength testing, tension strength testing, shear strength testing, bend strength testing, deflection strength testing, tearing strength testing, peel strength testing, torsional strength testing, or any other compressive or tensile testing, or dynamic testing.

9. The system as defined in claim 1, wherein one or more of the plurality of identifiable components are associated with a type of testing performed by the material testing system.

10. The system as defined in claim 1, wherein the troubleshooting information comprises one or more of troubleshooting tasks, troubleshooting task steps, informational documents, or web links to informational resources.
